# FASCICULE DE BREVET EUROPEEN

(11) **EP 2 814 683 B1**
(45) Date de publication et mention de la délivrance du brevet: **06.04.2016**
(21) Numéro de dépôt: 13706597.5
(22) Date de dépôt: 30.01.2013
(51) Int. Cl.: B60K 5/04, B62D 21/15, B62D 21/11, B60K 17/24

(54) **DISPOSITIF SUPPORT DE PALIER RELAIS D'UNE TRANSMISSION DE VEHICULE AUTOMOBILE, AYANT UNE FONCTION D'IMPACTEUR DE CHOC**
BEFESTIGUNGSVORRICHTUNG EINES LAGERS EINER ANTRIEBSWELLE EINES KRAFTFAHRZEUGS, MIT EINER STOSSAUFNAHMEFUNKTION
SUPPORT DEVICE OF A BEARING OF A DRIVE SHAFT OF A MOTOR VEHICLE, WITH A SHOCK IMPACTER FUNCTION

(30) Priorité: 16.02.2012 FR 1251445
(43) Date de publication de la demande: 24.12.2014
(73) Titulaire: Peugeot Citroën Automobiles SA, 78140 Vélizy Villacoublay (FR); GM Global Technology Operations LLC, Detroit, MI 48265-3000 (US)
(72) Inventeur: DUMAINE, Franck, F-14320 Clinchamps Sur Orne (FR); FACCHINETTI, Matteo Luca, F-75014 Paris (FR)
(74) Mandataire: Rosenberg, Muriel Sylvie
(86) Numéro de dépôt international: PCT/FR2013/050194
(87) Numéro de publication internationale: WO 2013/121124

(56) Documents cités:
- EP-A1- 1 533 162
- FR-A1- 2 876 630
- FR-A3- 2 902 706
- FR-A3- 2 921 593

## Description

L'invention concerne un dispositif support de palier relais d'une transmission de véhicule automobile, ayant une fonction d'impacteur de choc, et une application à un ensemble comportant un groupe moto propulseur de véhicule automobile

### ARRIÈRE-PLAN DE L'INVENTION

On sait que pour réduire l'encombrement du compartiment moteur, de nombreux véhicules automobiles comprennent un groupe moto propulseur transversal, c'est-à-dire dont l'axe de rotation s'étend perpendiculairement à l'axe longitudinal du véhicule. Pour s'adapter à l'excentration de la boite de vitesse, avec une sortie de différentiel implantée sur un côté opposé, il est alors nécessaire de prévoir une transmission comprenant un palier relais généralement porté par un dispositif support de palier relais fixé au groupe moto propulseur.

Par ailleurs, afin d'assurer la sécurité des passagers du véhicule automobile il est généralement prévu que le berceau du groupe moto propulseur soit configuré pour se déformer sous l'effet d'un choc avant de façon à guider le groupe moto propulseur de manière à faire passer celui-ci sous l'habitacle. À cet effet le groupe moto propulseur est équipé d'impacteurs qui sont montés en regard de parties du berceau adaptées à venir en appui sur les impacteurs lors d'un choc avant. Les impacteurs ont une double fonction qui est d'anticiper le contact entre le groupe moto propulseur et le berceau pour anticiper la décélération du véhicule; et, réaliser une déformation locale maitrisée du berceau utile à transformer une partie de l'énergie cinétique initiale du véhicule; le tout au profit de l'intégrité de l'habitacle et de ses occupants.

Pour assurer sa fonction, un impacteur doit être résistant aux chocs et rigidement fixé au groupe moto propulseur de sorte que la surface occupée par un impacteur sur le côté d'un groupe moto propulseur est relativement importante.

Un dispositif selon le préambule de la revendication 1 est connu du document FR 2 902 706 A3, et un ensemble selon le préambule de la revendication 4 est connu du document EP 1 533 162 A1.

### OBJET DE L'INVENTION

Un but de l'invention et de proposer un dispositif assurant la fonction d'impacteur tout en minimisant l'espace occupé pour la réalisation de cette fonction.

### BRÈVE DESCRIPTION DE L'INVENTION

En vue de la réalisation de ce but, on propose un dispositif support de palier relais d'une transmission de véhicule automobile, comprenant une platine portant un organe support de palier relais et un impacteur de choc fixé sur la platine.

Ainsi, la fixation de l'impacteur de choc sur le groupe moto propulseur est assurée par les moyens de fixation du palier relais de transmission de sorte que l'encombrement global du dispositif ainsi réalisé est inférieur à l'encombrement d'un support de palier relais et d'un impacteur séparés.

Selon une version avantageuse de l'invention, l'impacteur de choc est réalisé en une seule pièce avec l'organe support de palier relais. Ainsi l'impacteur de choc à une rigidité accrue tout en minimisant son encombrement.

Selon un aspect avantageux de l'invention, l'impacteur de choc est configuré selon une forme en C, dans un plan perpendiculaire à la platine. Ainsi lorsque la partie de berceau en regard de l'impacteur de choc vient en contact avec celui-ci, l'impacteur de choc est ancré dans la partie du berceau ce qui assure une meilleure précision du guidage du groupe moto propulseur.

Selon un autre aspect de l'invention, celle-ci concerne un ensemble comportant un groupe moto propulseur de véhicule automobile porté par un berceau, et sur lequel est fixé un dispositif support de palier relais comprenant une platine portant un organe support de palier relais, et un impacteur de choc fixé sur la platine, en regard d'une partie berceau.

De préférence, l'ensemble comporte un contre impacteur fixé au berceau en regard de l'impacteur de choc. Ceci permet d'assurer un contact très rapide entre le berceau et le groupe moto propulseur, et donc d'améliorer le guidage du groupe moto propulseur vers une partie du véhicule non occupée par les passagers.

### BRÈVE DESCRIPTION DES DESSINS

D'autres caractéristiques et avantages de l'invention apparaîtront à la lecture de la description qui suit d'un mode de réalisation particulier non limitatif de l'invention en référence aux figures ci-jointes parmi lesquelles :
- La figure 1 est une vue en perspective schématique partielle d'un ensemble selon l'invention comportant un support de palier relais assurant simultanément une fonction d'impacteur de choc,
- La figure 2 est une vue de côté selon la flèche II de la figure 1 d'un ensemble de la figure 1 équipé d'un palier relais.

### DESCRIPTION DETAILLÉE DE L'INVENTION

En référence aux figures, l'ensemble selon l'invention comporte de façon connue en soi un groupe moto propulseur 1 pour un véhicule automobile symbolisé par un berceau 2. Un dispositif support 3 d'un palier relais 6 est fixé au groupe moto propulseur. Le dispositif support 3 comporte une platine 4 portant un organe support 5 du palier relais 6 monté sur un arbre de transmission 7.

Selon l'invention, l'ensemble comprend en outre un impacteur de choc 8 réalisé en une seule pièce avec l'organe support 5 du palier relais et la platine 4.

Comme illustré par les figures, l'impacteur de choc 8 est de préférence configuré selon une forme en C dans un plan perpendiculaire à la platine, et a une ouverture 9 tournée vers une partie de berceau 10 en forme de cuvette entourant un contre-impacteur généralement désigné en 11.Dans le mode de réalisation préféré illustré, le contre-impacteur 11 est formé de deux morceaux de tôles 12 configurés en creux est fixés l'un à l'autre, par exemple par soudage par points pour former un caisson ayant un bord fin 13 s'étendant en regard de l'impacteur de choc 8. Le contre-impacteur 11 est rigidifié par des entretoises 14 s'étendant entre les morceaux de tôles 12 et montées sur des vis 15 dont les têtes 16 sont serties sur la tôle 17 formant le berceau 2. Le contre-impacteur 11 est maintenu en place sur le berceau 2 par des écrous 18 engagés sur les vis 15.

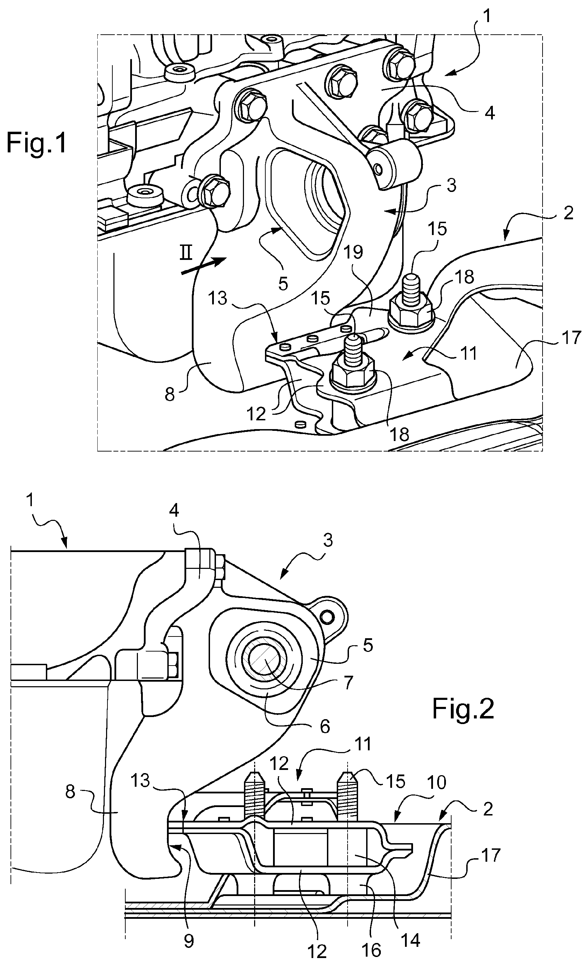

Dans le mode de réalisation préférée illustré, le contre-impacteur 11 comporte en outre une butée latérale 19, réalisée par une découpe appropriée des morceaux de tôle 12, et qui s'étend latéralement sur le côté de l'impacteur 8 lorsque le contre-impacteur 11 est monté en regard de l'ouverture en C 9 comme illustré par la figure 1.

Bien entendu l'invention n'est pas limitée au mode de réalisation décrit et on peut y apporter des variantes de réalisation sans sortir du cadre de l'invention telle que définie par les revendications.

En particulier, bien que le dispositif de selon l'invention ait été illustré avec un impacteur 8 en une seule pièce avec l'organe support de palier relais, on peut prévoir un impacteur 8 réalisé de façon séparée et fixé sur la platine support 4.

Bien que l'impacteur 8 ait été illustré selon une configuration en C, on peut réaliser un impacteur, de préférence en forme de crochet ayant une forme quelconque, par exemple en forme de V.

Bien que le contre-impacteur 11 ait été illustré sous forme d'un caisson creux, ce qui permet d'obtenir une structure rigide avec un poids minimum, et surtout une bonne ductilité apte à transformer une partie de l'énergie cinétique initiale du véhicule au travers d'une déformation locale et maitrisée, on pourra également réaliser le contre-impacteur sous une forme massive, si les données d'entrée du scénario choc le permettent.

## Revendications

1. Dispositif support de palier relais d'une transmission de véhicule automobile, comprenant une platine (4) portant un organe support (5) d'un palier relais (6), **caractérisé en ce qu'**il comporte un impacteur de choc (8) fixé sur la platine (4).

2. Dispositif selon la revendication 1, **caractérisé en ce que** l'impacteur de choc (8) est réalisé en une seule pièce avec l'organe support (5) du palier relais.

3. Dispositif selon la revendication 2, **caractérisé en ce que** l'impacteur de choc (8) est configuré selon une forme en C, dans un plan perpendiculaire à la platine.

4. Ensemble comportant un groupe moto propulseur (1) de véhicule automobile, porté par un berceau (2), et sur lequel est fixé un dispositif support (5) d'un palier relais, comprenant une platine (4) portant un organe support (5) de palier relais, **caractérisé en ce qu'**il comporte un impacteur de choc (8) fixé sur la platine (4), en regard d'une partie du berceau (10).

5. Ensemble selon la revendication 4, **caractérisé en ce que** l'impacteur de choc (8) est réalisé en une seule pièce avec l'organe support (5) de palier relais.

6. Ensemble selon la revendication 5, **caractérisé en ce que** l'impacteur de choc (8) est configuré selon une forme en C ayant une ouverture (9) tournée vers ladite une partie du berceau.

7. Ensemble selon la revendication 4, **caractérisé en ce qu'**il comporte un contre-impacteur (11) fixé au berceau en regard de l'impacteur de choc (8).

8. Ensemble selon la revendication 7, **caractérisé en ce que** le contre-impacteur (11) comporte une butée latérale (19) s'étendant en regard d'un coté de l'impacteur de choc (8).

9. Ensemble selon la revendication 7, **caractérisé en ce que** le berceau (2) comporte une partie en cuvette (10) encadrant le contre-impacteur.

10. Ensemble selon la revendication 4, **caractérisé en ce que** le contre-impacteur (11) comporte deux morceaux de tôle (12) configurés en creux fixés l'un à l'autre pour former un caisson ayant un bord mince (13) s'étendant en regard de l'impacteur de choc.

## Patentansprüche

1. Tragvorrichtung eines Relaislagers eines Kraftfahrzeuggetriebes, die eine Platte (4) umfasst, die ein Tragorgan (5) eines Relaislagers (6) trägt, **dadurch gekennzeichnet, dass** sie einen Stoßaufnehmer (8), der auf der Platte (4) befestigt ist, umfasst.

2. Vorrichtung nach Anspruch 1, **dadurch gekennzeichnet, dass** der Stoßaufnehmer (8) aus einem einzigen Teil mit dem Tragorgan (5) des Relaislagers hergestellt ist.

3. Vorrichtung nach Anspruch 2, **dadurch gekennzeichnet, dass** der Stoßaufnehmer (8) gemäß einer C-Form in einer Ebene senkrecht zu der Platte ausgelegt ist.

4. Baugruppe, die ein Antriebsaggregat (1) eines Kraftfahrzeugs umfasst, das von einer Aufhängung (2) getragen wird, und auf der eine Tragvorrichtung (5) eines Relaislagers befestigt ist, die eine Platte (4) umfasst, die ein Tragorgan (5) für Relaislager trägt, **dadurch gekennzeichnet, dass** sie einen Stoßaufnehmer (8) trägt, der an der Platte (4) einem Teil der Aufhängung (10) gegenüberliegend befestigt ist.

5. Baugruppe nach Anspruch 4, **dadurch gekennzeichnet, dass** der Stoßaufnehmer (8) aus einem einzigen Teil mit dem Tragorgan (5) für Relaislager hergestellt ist.

6. Baugruppe nach Anspruch 5, **dadurch gekennzeichnet dass** der Stoßaufnehmer (8) gemäß einer C-Form, die eine Öffnung (9), die zu dem einen Teil der Aufhängung gerichtet ist, ausgelegt ist.

7. Baugruppe nach Anspruch 4, **dadurch gekennzeichnet, dass** sie einen Gegen-Stoßaufnehmer (11), der an der Aufhängung gegenüber dem Stoßaufnehmer (8) befestigt ist, umfasst.

8. Baugruppe nach Anspruch 7, **dadurch gekennzeichnet, dass** der Gegen-Stoßaufnehmer (11) einen seitlichen Anschlag (19) umfasst, der sich gegenüber einer Seite des Stoßaufnehmers (8) erstreckt.

9. Baugruppe nach Anspruch 7, **dadurch gekennzeichnet, dass** die Aufhängung (2) einen Wannenteil (10), der den Gegen-Stoßaufnehmer umrahmt, umfasst.

10. Baugruppe nach Anspruch 4, **dadurch gekennzeichnet, dass** der Gegen-Stoßaufnehmer (11) zwei Blechstücke (12) umfasst, die in Vertiefung aneinander befestigt ausgelegt sind, um einen Kasten zu bilden, der einen dünnen Rand (13) hat, der sich gegenüber dem Stoßaufnehmer erstreckt.

## Claims

1. A device for supporting a motor vehicle transmission centre support bearing, including a mounting plate (4) carrying a supporting member (5) of a centre support bearing (6), **characterized in that** it comprises a shock impacter (8) fixed on the mounting plate (4).

2. The device according to Claim 1, **characterized in that** the shock impacter (8) is made as one piece with the supporting member (5) of the centre support bearing.

3. The device according to Claim 2, **characterized in that** the shock impacter (8) is configured according to a C shape, in a plane perpendicular to the mounting plate.

4. An assembly comprising a motor vehicle power train (1) supported by a cradle (2), and to which there is attached a device (5) for supporting a centre support bearing, including a mounting plate (4) bearing a member (5) that supports the centre support bearing, **characterized in that** it comprises a shock impacter (8) fixed on the mounting plate (4), opposite a portion of the cradle (10).

5. The assembly according to Claim 4, **characterized in that** the shock impacter (8) is made as one piece with the member (5) for supporting the centre support bearing.

6. The assembly according to Claim 5, **characterized in that** the shock impacter (8) is configured according to a C shape having an opening (9) turned toward said one portion of the cradle.

7. The assembly according to Claim 4, **characterized in that** it comprises a counter-impacter (11) fixed to the cradle opposite the shock impacter (8).

8. The assembly according to Claim 7, **characterized in that** the counter-impacter (11) comprises a lateral stop (19) extending opposite a side of the shock impacter (8).

9. The assembly according to Claim 7, **characterized in that** the cradle (2) comprises a dished part (10) surrounding the counter-impacter.

10. The assembly according to Claim 4, **characterized in that** the counter-impacter (11) comprises two pieces of sheet metal (12) configured in a hollow manner fixed to one another to form a case having a thin edge (13) extending opposite the shock impacter.
